# EUROPÄISCHE PATENTANMELDUNG

(11) **EP 0 678 369 A2**
(43) Veröffentlichungstag der Anmeldung: **25.10.1995**
(21) Anmeldenummer: 95105273.7
(22) Anmeldetag: 07.04.1995
(51) Int. Cl.: B29C 45/16, B29C 45/17

(54) **Verfahren zum Spritzgiessen von mindestens aus zwei unterschiedlichen Schichten bestehenden Gegenständen**

(30) Priorität: 23.04.1994 DE 4414258
(71) Anmelder: Battenfeld GmbH, D-58540 Meinerzhagen (DE)
(72) Erfinder: Eckhardt, Helmut, Dipl.-Ing., D-58540 Meinerzhagen (DE); Plank, Hermann, Dipl.-Ing., D-63225 Langen (DE); Bleier, Harald, Ing., A-2700 Wiener Neustadt (AT)

(57) **Zusammenfassung**

Die vorliegende Erfindung bezieht sich auf ein Verfahren zum Spritzgießen von mindestens aus zwei unterschiedlichen Schichten bestehenden Gegenständen. Die Außenschicht besteht dabei aus Lack, verfahrensgemäß kommt ein flüssiger Lack zum Einsatz. Dieser wird durch eine Lack-Einspritzvorrichtung (1) über eine Lack-Einspritzdüse (2) eingespritzt. Kunststoffschmelze gelangt durch eine Spritzeinheit in die Kavität (3). Erfindungsgemäß ist vorgesehen, daß der flüssige Lack in den Fließweg der Schmelze im Bereich vor der Kavität vor dem Einspritzen der Schmelze eingespritzt wird, so daß die Schmelze vor ihrer Verteilung in der Kavität (3) von Lack ummantelt wird. Es wird damit möglich, flüssige Lacke zur Lackierung von Spritzgießteilen im Werkzeug einzusetzen. Außerdem ermöglicht das erfindungsgemäße Verfahren eine schnelle und damit wirtschaftliche Arbeitsweise.

## Beschreibung

Die Erfindung betrifft ein Verfahren zum Spritzgießen von mindestens aus zwei unterschiedlichen Schichten bestehenden Gegenständen, wobei die Außenschicht aus einem Lack hergestellt wird, wobei ein flüssiger Lack zum Einsatz kommt, der durch mindestens eine Lack-Einspritzvorrichtung über mindestens eine Lack-Einspritzdüse eingespritzt wird, und wobei geschmolzenes Kunststoffmaterial durch eine Spritzeinheit über eine Kunststoff-Einspritzdüse in die Kavität eines Spritzgießwerkzeugs eingebracht wird.

Ein Verfahren der gattungsgemäßen Art ist aus der DE-OS 24 61 925 bekannt. Dort werden lackierte Kunststoff-Formkörper hergestellt, indem zunächst das eigentliche Spritzgießteil aus Kunststoffmaterial gespritzt wird. Dann wird zunächst die eine Seite des Formkörpers mit Lack beschichtet. Dazu wird das Werkzeug um einen gewissen Betrag geöffnet und über eine Lack-Einspritzvorrichtung flüssiger Lack in die Kavität eingespritzt. Durch das Schließen des Werkzeugs verteilt sich der Lack auf dieser Seite des Formkörpers. Dieselbe Prozedur wird auf der anderen Seite des Formkörpers wiederholt.

Ein anderes Verfahren für die Herstellung lackbeschichteter Spritzgießteile ist aus der DE 36 42 138 A1 bekannt. Dort werden vor der Einbringung des Kunststoffmaterials die formbildenden Flächen des Werkzeugs mit Lack besprüht. Zu diesem Zweck ist u. a. vorgesehen, daß in das Werkzeug integrierte Sprühköpfe den Lack vor der Schmelzeeinspritzung einbringen.

Schließlich ist ein ähnliches Verfahren aus der P 43 40 990 bekannt. Darin wird ein Herstellungsverfahren für einen aus zwei unterschiedlichen Schichten bestehenden Kunststoffgegenstand beschrieben. Die äußere Schicht des Gegenstandes ist dabei Lack, der im flüssigen Zustand aufgebracht wird. Hierzu wird der Lack in Form von Granulat in eine Kunststoff-Plastifiziereinheit gegeben. Unter Einwirkung der Knetbewegung einer Extruderschnecke und der Wärmeenergie aus Heizelementen, die um den Extruderschneckenzylinder angeordnet sind, wird das Lackgranulat plastifiziert und verflüssigt. Es gelangt über eine Einspritzdüse in die Kavität eines Spritzgießwerkzeugs zusammen mit plastifizierter Kunststoffschmelze. Durch eine entsprechend ausgebildete Düse wird dabei erreicht, daß der Lack die Kunststoffschmelze umhüllt und sich in dieser Form auch in der Kavität des Werkzeugs anordnet. Möglich ist auch, daß zunächst eine oder mehrere Schichten aus Lack in die Kavität des Werkzeugs eingespritzt werden und danach der Kunststoff im flüssigen Zustand. Die Formteile erhalten so einen zwei-oder mehrschichtigen Aufbau, wobei die Lackschichten das Kunststoffmaterial vollständig umgeben.

Der Nachteil dieser Technologie ist es, daß nur solche Lacke verarbeitet werden können, die sich wie Thermoplaste verhalten, d. h. die in Granulatform vorliegenden Lacke müssen sich während der Verarbeitung durch einen Schneckenextruder plastifizieren lassen. Eine weitere Voraussetzung ist, daß die plastifizierten, also verflüssigten, Lacke im Schneckenzylinder des Extruders unter der dort herrschenden hohen Temperatur nicht aushärten.

Der Erfindung liegt die **Aufgabe** zugrunde, ein Verfahren zu schaffen, mit dem es möglich ist, auch Lacke zu verarbeiten, die sich nicht wie Thermoplaste verhalten, die also nicht in den bisher für diesen Zweck eingesetzten Extruderschneckeneinheiten plastifiziert werden können. Mit dem Verfahren soll es möglich sein, auch unter Einsatz derartiger Lacke Kunststoff-Formteile herzustellen, die vollständig von der Lackschicht umgeben sind. Die Herstellung lackbeschichteter Kunststoff-Formkörper soll dabei natürlich so wirtschaftlich wie möglich erfolgen.

Die **Lösung** der Aufgabe durch die Erfindung ist dadurch gekennzeichnet, daß der flüssige Lack in den Fließweg des geschmolzenen Kunststoffmaterials im Bereich vor der eigentlichen Kavität (3) des Spritzgießwerkzeugs (4) zumindest teilweise vor dem Einspritzen der Schmelze eingespritzt wird, derart, daß das anschließend eingespritzte geschmolzene Kunststoffmaterial vor seiner Verteilung in der Kavität (3) des Spritzgießwerkzeugs (4) weitgehend von Lack ummantelt wird.

Die aufgabengemäße Lösung kann alternativ auch dadurch gelöst werden,
daß
a) zunächst flüssiger Lack durch mindestens eine Lack-Einspritzvorrichtung (1) über mindestens eine Lack-Einspritzdüse (2) in die Kavität (3) eines Spritzgießwerkzeugs (4) eingebracht wird, bis diese volumetrisch gefüllt ist,
daß
b) anschließend ein vorbestimmtes Volumen des Lacks aus der Kavität (3) wieder abgelassen wird, so daß sich im Inneren des Spritzgießwerkzeugs (4) ein Hohlraum bildet,
und daß
c) anschließend geschmolzenes Kunststoffmaterial durch eine Spritzeinheit (5) über eine Kunststoff-Einspritzdüse (6) in die Kavität (3) des Spritzgießwerkzeugs (4) eingebracht wird.

Zu dieser Lösung sind zwei Varianten möglich. Zunächst kann dieses Verfahren dadurch variiert werden,
daß
a) zunächst flüssiger Lack durch mindestens eine Lack-Einspritzvorrichtung (1) über mindestens eine Lack-Einspritzdüse (2) in die Kavität (3) eines Spritzgießwerkzeugs (4) eingebracht wird, bis diese volumetrisch gefüllt ist,
daß
b) anschließend das Volumen der Kavität (3), vorzugsweise durch verschiebbare Elemente, vergrößert wird, wahrend gleichzeitig ein Fluid, vorzugsweise Gas, in die Kavitat (3) eingebracht wird, so daß sich im Inneren der Kavität (3) ein Hohlraum bildet, der vom flüssigen Lack ummantelt wird,
und daß
c) anschließend geschmolzenes Kunststoffmaterial durch eine Spritzeinheit (5) über eine Kunststoff-Einspritzdüse (6) in die Kavität (3) des Spritzgießwerkzeugs (4) eingebracht wird, insbesondere bei gleichzeitiger Entlüftung des Fluids aus der Kavität (3), so daß der sich im Inneren der Kavität (3) befindliche Hohlraum mit Kunststoffmaterial weitgehend ausgefüllt wird.

Schließlich kann das Verfahren auch so durchgeführt werden,
daß
a) zunächst flüssiger Lack durch mindestens eine Lack-Einspritzvorrichtung (1) über mindestens eine Lack-Einspritzdüse (2) in die Kavität (3) eines Spritzgießwerkzeugs (4) eingebracht wird, bis diese volumetrisch gefüllt ist,
und daß
b) anschließend das Volumen der Kavität (3), vorzugsweise durch verschiebbare Elemente, vergrößert wird, während gleichzeitig geschmolzenes Kunststoffmaterial durch eine Spritzeinheit (5) über eine Kunststoff-Einspritzdüse (6) in die Kavität (3) des Spritzgießwerkzeugs (4) eingebracht wird, so daß der durch die Volumenvergrößerung der Kavität (3) im Inneren entstehende, vom flüssigen Lack ummantelte Hohlraum mit Kunststoffmaterial weitgehend ausgefüllt wird.

Die Kavität des Werkzeugs wird also hiernach zunächst vollständig volumetrisch mit Lack gefüllt. Dadurch werden zuverlässig alle formgebenden Wandungen der Kavität mit Lack benetzt. Dann wird ein vorbestimmtes Volumen des Lacks wieder aus der Kavität abgelassen, so daß sich ein Hohlraum in der Kavität bildet. Beispielsweise kann durch eine Öffnung am tiefsten Punkt des Werkzeugs der Lack ablaufen, bis die Kavität weitgehend geleert ist. Dann erst wird geschmolzenes Kunststoffmaterial in die Kavität in an sich bekannter Weise eingespritzt.

Gemäß der als Variation dieses Verfahrens aufgezeigten Lösung wird das Volumen der Kavität (3) vergrößert. Hierfür sind z. B. verschiebbare Elemente (Schieber) bekannt, die aus der Kavität (3) herausgefahren werden und so erst die gewünschte Form des herzustellenden Werkstücks erzeugen. Gleichzeitig mit der Volumenvergrößerung der Kavität (3) wird ein Fluid eingebracht; hierbei kommt insbesondere Gas zum Einsatz. Dadurch bildet sich im Inneren der Kavität (3) ein unter Druck stehender Hohlraum, der vom flüssigen Lack ummantelt wird; der Druck des Fluids drückt dabei den Lack gegen die Wände der Kavität, wobei bei entsprechender Wahl des Gasdrucks der Einfluß der Schwerkraft auf den Lack untergeordnet ist. Anschließend wird geschmolzenes Kunststoffmaterial durch die Spritzeinheit (5) über die Kunststoff-Einspritzdüse (6) in die Kavität (3) eingebracht. Dabei wird vorzugsweise gleichzeitig das Fluid aus der Kavität (3) abgelassen. So wird der sich im Inneren der Kavität (3) befindliche Hohlraum weitgehend mit Kunststoff ausgefüllt. Auf das Einbringen von Gas in die Kavität (3) kann auch verzichtet werden: Dann wird nach der volumetrischen Füllung der noch nicht vergrößerten Kavität mit Lack bei gleichzeitigem Herausfahren z. B. der Schieber Schmelze eingespritzt; der durch die Volumenvergrößerung der Kavität im Inneren entstehende Hohlraum, der vom Lack ummantelt ist, wird dann also direkt mit Schmelze ausgefüllt.

Mit der Erfindung ist es nunmehr möglich, die Herstellung von lackierten Kunststoff-Formteilen in einfacherer und damit wirtschaftlicherer Weise durchzuführen. Durch den Einsatz des erfindungsgemäßen Verfahrens ist auch die Verarbeitung von Lacken möglich, die ausschließlich flüssig und nicht in plastifizierbarer Granulatform vorliegen.

Gemäß einer Weiterbildung der Erfindung ist vorgesehen, daß als Lack-Einspritzvorrichtung (1) eine Kolbenspritzeinheit zum Einsatz kommt. Alternativ dazu kann als Lack-Einspritzvorrichtung auch eine Pumpe, insbesondere eine Zahnradpumpe, eingesetzt werden.

Vorteilhafterweise kann für eine verbesserte Verarbeitung des Lacks vorgesehen werden, daß der Lack vor dem Einspritzen auf eine definierte Temperatur erhitzt wird. Dies kann insbesondere durch die Lack-Einspritzvorrichtung (1) erfolgen.

Für eine optimale Verarbeitung kann es weiterhin erforderlich sein, daß der einzuspritzende Lack und das einzuspritzende Kunststoffmaterial eine ähnlich große Viskosität haben. Das erfindungsgemäße Verfahren eignet sich selbstverständlich auch für den Fall, daß Zwei- oder Mehrkomponenten-Lacke eingesetzt werden sollen, bei denen also der Aushärteprozeß erst dann einsetzt, wenn die verschiedenen Komponenten vermischt werden. Für diesen Fall ist vorgesehen, daß zwei oder mehrere verschiedene Lack-Einspritzvorrichtungen (1, 8) über zwei oder mehrere verschiedene Lack-Einspritzdüsen (2, 9) eingespritzt werden, wobei sich die Komponenten erst unmittelbar hinter den Lack-Einspritzdüsen (2, 9) vermischen.

Abhängig von den konkreten Eigenschaften des zu verarbeitenden Flüssiglacks kann es vorteilhaft sein, daß zwecks Aushärtung des Lacks die Temperatur des Spritzgießwerkzeugs (4), vorzugsweise kurzzeitig, durch geeignete Temperierelemente (10) erhöht wird. Vorrichtungen, die eine kurzzeitige Anliebung der Werkzeugtemperatur ermöglichen, sind unter der Bezeichnung "Variotherm" bekannt. Die Temperatur der formgebenden Flächen des Spritzgießwerkzeugs (4) kann nach einem weitergebildeten Kennzeichen der Erfindung zwecks Aushärtung des in die Kavität (3) einzubringenden Lacks unmittelbar vor dem Schließen des Werkzeugs und/oder vor dem Einspritzen des Lacks durch Strahlung, durch Induktion oder in ähnlicher Weise erhöht werden.

Besonders vorteilhaft kann es sein, einen mit Lack versehenen Kunststoffgegenstand zu fertigen, der zwecks Gewichtsersparnis oder aus anderen Gründen im Inneren hohl ist. Die Technologie, die für diesen Fall einzusetzen ist, ist als Gasinnendruckverfahren bekannt; gemäß einer Weiterbildung des Verfahrens wird zu diesem Zweck nach Einbringen des mit Lack ummantelten geschmolzenen Kunststoffmaterials in die Kavität (3) ein Fluid, vorzugsweise Gas, in den noch flüssigen Teil des Kunststoffs eingebracht.

Zur Beschleunigung des Spritzgießprozesses kann vorteilhafterweise vorgesehen werden, daß dem einzuspritzenden Lack unmittelbar vor seiner Einspritzung ein Reaktionsbeschleuniger (11) zugegeben wird, der die Aushärtung des Lacks beschleunigt.

Weiterhin kann vorgesehen werden, daß der einzuspritzende Kunststoff ein schäumbarer Kunststoff ist.

Zur besseren Entformung des Werkstücks am Ende des Spritzgießvorgangs kann es des weiteren angebracht sein, vor der dem Einbringen des mit Lack ummantelten Kunststoffmaterials bzw. vor dem Einbringen des Lacks in die Kavität (3) des Spritzgießwerkzeugs (4) die formenden Innenflächen der Kavität (3) mit einem Mittel zu versehen, das das spätere Entformen des Gegenstands aus dem Spritzgießwerkzeug (4) erleichtert, z. B. mit einer Silikon-Lösung.

Es kann bei der alternativ aufgezeigten Lösungsvariante sinnvoll sein, die mit Lack zunächst vollständig gefüllte Kavität für eine vorbestimmte Zeit mit einem Druck zu beaufschlagen, wodurch die Wandhaftung des Lacks verbessert werden kann. Die volumetrische Füllung der Kavität mit Lack erfolgt vorzugsweise "von unten her", also entgegen der Richtung der Schwerkraft.

In der Zeichnung sind einige Ausführungsbeispiele der Erfindung näher erläutert.
- Fig. 1: zeigt einen schematischen Aufbau zur Durchführung des erfindungsgemäßen Verfahrens.
- Fig. 2: zeigt denselben Aufbau, wobei jedoch ein Mehrkomponenten-Lack verarbeitet werden soll.
- Fig. 3: zeigt das Spritzgießwerkzeug samt Einspritzdüsen für Lack und Kunststoffschmelze.

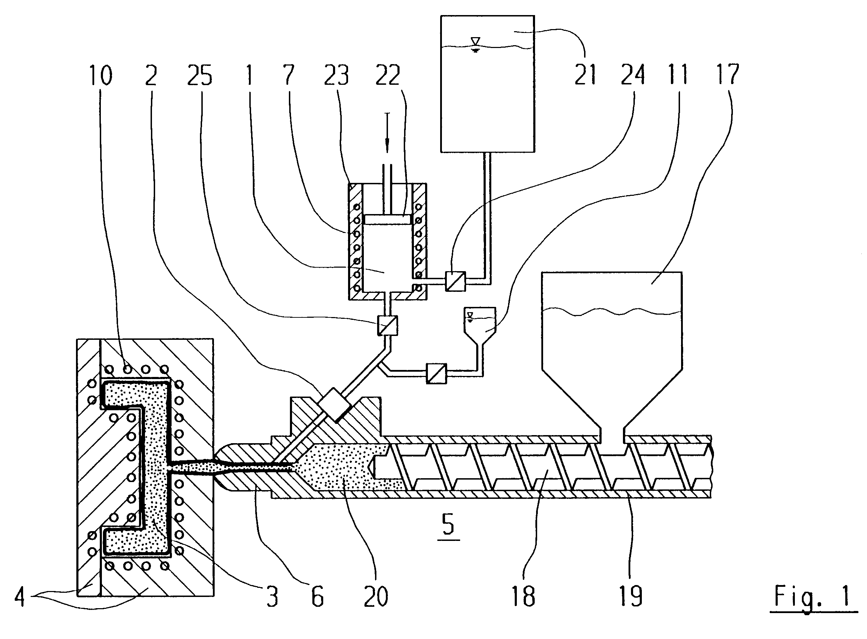

Figur 1 zeigt schematisch eine Vorrichtung zur Durchführung des erfindungsgemäßen Verfahrens. In der Spritzeinheit 5 rotiert eine Plastifizierschnecke 18, mittels der Kunststoffgranulat, Kunststoffpulver oder Kunststoffgries, das bzw. der über den Einfülltrichter 17 in den Schneckenzylinder 19 gelangt, plastifiziert wird. Während dies der typische Verfahrensablauf für die Verarbeitung von Thermoplasten ist, gilt das erfindungsgemäße Verfahren analog auch für die Verarbeitung von Duroplasten und Elastomeren. Die Kunststoffschmelze, die sich im Schneckenvorraum 20 befindet, wird mittels einer axialen Bewegung der Schnecke 18 über die Kunststoff-Einspritzdüse 6 in die Kavität 3 des geschlossenen Spritzgießwerkzeugs 4 ausgetrieben. Vorher wird jedoch Flüssiglack, der sich in einem Lackbehälter 21 befindet, in den Fließweg der Kunststoffschmelze - also in den Bereich zwischen Schneckenvorraum 20 und eigentlicher Kavität 3 - gespritzt. Hierzu gelangt er über eine Leitung vom Lackbehälter 21 in die Lack-Einspritzvorrichtung 1. Der Kolben 22 befindet sich zu Beginn am unteren Ende des Zylinders 23. Das Ventil 24 wird geöffnet und der Kolben 22 nach oben bewegt. Dies geschieht zwecks Dosierung der entsprechenden einzuspritzenden Lackmenge bis zu einem definierten Hub. Dann wird das Ventil 24 geschlossen. Jetzt wird das Ventil 25 geöffnet. Durch Absenken des Kolbens 22 (in Pfeilrichtung) wird der Flüssiglack in die Lack-Einspritzdüse 2 gepreßt. Im vorliegenden Ausführungsbeispiel gelangt der Lack im Bereich der Kunststoff-Einspritzdüse 6 in den Fließweg der Schmelze, wo er die von Schneckenvorraum 20 ausgetriebene Kunststoffschmelze ummantelt.

Der Kunststoff wird - von Lack ummantelt - üblicherweise ohne weitere Zusätze eingespritzt. Es ist jedoch auch möglich, dem Kunststoff vor dem Einspritzen ein Treibmittel in chemischer oder physikalischer Form zuzusetzen, der ein Aufschäumen des Kunststoffs bewirkt. Durch das Treibmittel werden auch bei dickwandigen Formteilen die Einfallstellen sicher vermieden.

Um den Fertigungsprozeß wirtschaftlich zu machen, ist darauf zu achten, daß die Fertigungszeit möglichst kurz ist. Eine schnelle Aushärtung des eingespritzten Lacks ist daher wünschenswert. Dies kann zum einen dadurch erreicht werden, daß die dosierte Menge Lack, die sich im Zylinder 23 befindet vor dem Einspritzen in die Kavität mittels Heizelementen 7 erwärmt wird. Die Temperiermöglichkeit der Lack-Einspritzvorrichtung hat den Vorteil, daß durch die Temperierung bzw. Aufheizung des Lacks die Reaktion deutlich beschleunigt werden kann. Dies gilt insbesondere für Zweikomponenten-Lacke und solche, die eine Reaktion als Funktion der Zeit ausführen und bei denen diese Reaktionszeit durch Temperatureinwirkung beschleunigt werden kann.

Bei der Verarbeitung von duroplastischen Kunststoffen ist das Verfahren sehr einfach durchzuführen, da ein hohes Temperaturgefälle zwischen Werkzeugtemperatur und Umgebungstemperatur herrscht und außerdem die Werkzeuge heißer als die Schneckenzylinder sind. Dadurch wird der Reaktionsvorgang des eingespritzten Lacks deutlich beschleunigt.

Der Aushärtungsprozeß in der Spritzgießform 4 kann außerdem dadurch erhöht werden, daß die Form mittels Temperierelementen 10 kurzzeitig erwärmt wird. Als weitere Möglichkeit, ein schnelles Aushärten des Lacks zu erreichen, bietet sich schließlich an, dem Lack während des Einspritzens in die Kavität einen Reaktionsbeschleuniger 11 beizugeben.

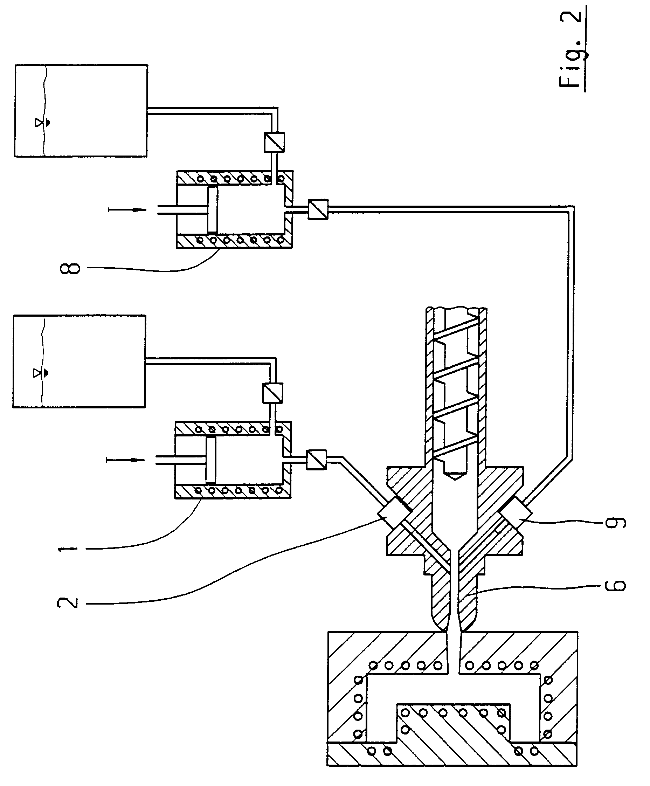

Figur 2 zeigt die erfindungsgemäße Ausführungsform, wenn ein Zweikomponenten-Lack für die Beschichtung des Kunststoffgegenstandes zum Einsatz kommen soll. Nunmehr sind zwei Lack-Einspritzvorrichtungen 1 und 8 vorhanden, die Lack den Lack-Einspritzdüsen 2 und 9 zuführen. Über diese Düsen gelangen die beiden Komponenten des Lacks unter guter Durchmischung in den Fließweg der Schmelze.

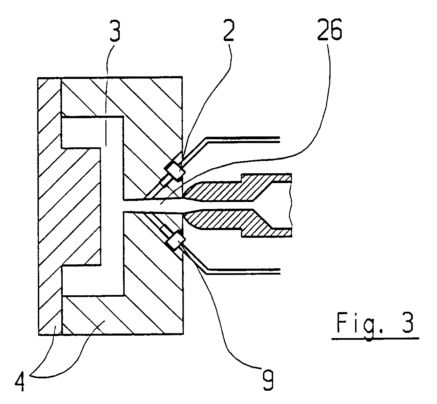

Während in Figur 2 der Fall dargestellt ist, daß die Lack-Einspritzdüsen 2 und 9 - genauso wie in Figur 1 - in die Kunststoff-Einspritzdüse 6 münden, besteht erfindungsgemäß auch die Möglichkeit, daß die Lack-Einspritzdüse an einer von der Kunststoff-Einspritzdüse verschiedenen Stelle im Bereich des Schmelzefließweges angeordnet ist. In Figur 3 ist der Fall zu sehen, daß - hier wieder im Falle der Verwendung eines Zweikomponenten-Lacks - die Lack-Einspritzdüsen 2 und 9 direkt in den Angußkanal 26 münden. Auch hier kommt es zu einer guten Vermischung beider Lackkomponenten, bevor sie mit der Schmelze, die sie ummanteln, in die Kavität 3 des Spritzgießwerkzeugs 4 eingebracht werden.

### Bezugszeichenliste:

- 1: Lack-Einspritzvorrichtung
- 2: Lack-Einspritzdüse
- 3: Kavität
- 4: Spritzgießwerkzeug
- 5: Spritzeinheit
- 6: Kunststoff-Einspritzdüse
- 7: Heizelemente für Lack
- 8: Lack-Einspritzvorrrichtung
- 9: Lack-Einspritzdüse
- 10: Temperierelemente
- 11: Reaktionsbeschleuniger
- 17: Einfülltrichter
- 18: Plastifizierschnecke
- 19: Schneckerzylinder
- 20: Schneckenvorraum
- 21: Lackbehälter
- 22: Kolben
- 23: Zylinder
- 24: Ventil
- 25: Ventil
- 26: Angußkanal

## Patentansprüche

1. Verfahren zum Spritzgießen von mindestens aus zwei unterschiedlichen Schichten bestehenden Gegenständen,
- wobei die Außenschicht aus einem Lack hergestellt wird,
- wobei ein flüssiger Lack zum Einsatz kommt, der durch mindestens eine Lack-Einspritzvorrichtung (1) über mindestens eine Lack-Einspritzdüse (2) eingespritzt wird, und
- wobei geschmolzenes Kunststoffmaterial durch eine Spritzeinheit (5) über eine Kunststoff-Einspritzdüse (6) in die Kavität (3) eines Spritzgießwerkzeugs (4) eingebracht wird,
**dadurch gekennzeichnet**,
daß der flüssige Lack in den Fließweg des geschmolzenen Kunststoffmaterials im Bereich vor der eigentlichen Kavität (3) des Spritzgießwerkzeugs (4) zumindest teilweise vor dem Einspritzen der Schmelze eingespritzt wird, derart, daß das anschließend eingespritzte geschmolzene Kunststoffmaterial vor seiner Verteilung in der Kavität (3) des Spritzgießwerkzeugs (4) weitgehend von Lack ummantelt wird.

2. Verfahren zum Spritzgießen von mindestens aus zwei unterschiedlichen Schichten bestehenden Gegenständen,
- wobei die Außenschicht aus einem Lack hergestellt wird,
- wobei ein flüssiger Lack zum Einsatz kommt, der durch mindestens eine Lack-Einspritzvorrichtung (1) über mindestens eine Lack-Einspritzdüse (2) eingespritzt wird, und
- wobei geschmolzenes Kunststoffmaterial durch eine Spritzeinheit (5) über eine Kunststoff-Einspritzdüse (6) in die Kavität (3) eines Spritzgießwerkzeugs (4) eingebracht wird,
**dadurch gekennzeichnet**,
daß
a) zunächst flüssiger Lack durch mindestens eine Lack-Einspritzvorrichtung (1) über mindestens eine Lack-Einspritzdüse (2) in die Kavität (3) eines Spritzgießwerkzeugs (4) eingebracht wird, bis diese volumetrisch gefüllt ist,
daß
b) anschließend ein vorbestimmtes Volumen des Lacks aus der Kavität (3) wieder abgelassen wird, so daß sich im Inneren des Spritzgießwerkzeugs (4) ein Hohlraum bildet,
und daß
c) anschließend geschmolzenes Kunststoffmaterial durch eine Spritzeinheit (5) über eine Kunststoff-Einspritzdüse (6) in die Kavität (3) des Spritzgießwerkzeugs (4) eingebracht wird.

3. Verfahren zum Spritzgießen von mindestens aus zwei unterschiedlichen Schichten bestehenden Gegenständen,
- wobei die Außenschicht aus einem Lack hergestellt wird,
- wobei ein flüssiger Lack zum Einsatz kommt, der durch mindestens eine Lack-Einspritzvorrichtung (1) über mindestens eine Lack-Einspritzdüse (2) eingespritzt wird, und
- wobei geschmolzenes Kunststoffmaterial durch eine Spritzeinheit (5) über eine Kunststoff-Einspritzdüse (6) in die Kavität (3) eines Spritzgießwerkzeugs (4) eingebracht wird,
**dadurch gekennzeichnet**,
daß
a) zunächst flüssiger Lack durch mindestens eine Lack-Einspritzvorrichtung (1) über mindestens eine Lack-Einspritzdüse (2) in die Kavität (3) eines Spritzgießwerkzeugs (4) eingebracht wird, bis diese volumetrisch gefüllt ist,
daß
b) anschließend das Volumen der Kavität (3), vorzugsweise durch verschiebbare Elemente, vergrößert wird, während gleichzeitig ein Fluid, vorzugsweise Gas, in die Kavität (3) eingebracht wird, so daß sich im Inneren der Kavität (3) ein Hohlraum bildet, der vom flüssigen Lack ummantelt wird,
und daß
c) anschließend geschmolzenes Kunststoffmaterial durch eine Spritzeinheit (5) über eine Kunststoff-Einspritzdüse (6) in die Kavität (3) des Spritzgießwerkzeugs (4) eingebracht wird, insbesondere bei gleichzeitiger Entlüftung des Fluids aus der Kavität (3), so daß der sich im Inneren der Kavität (3) befindliche Hohlraum mit Kunststoffmaterial weitgehend ausgefüllt wird.

4. Verfahren zum Spritzgießen von mindestens aus zwei unterschiedlichen Schichten bestehenden Gegenständen,
- wobei die Außenschicht aus einem Lack hergestellt wird,
- wobei ein flüssiger Lack zum Einsatz kommt, der durch mindestens eine Lack-Einspritzvorrichtung (1) über mindestens eine Lack-Einspritzdüse (2) eingespritzt wird, und
- wobei geschmolzenes Kunststoffmaterial durch eine Spritzeinheit (5) über eine Kunststoff-Einspritzdüse (6) in die Kavität (3) eines Spritzgießwerkzeugs (4) eingebracht wird,
**dadurch gekennzeichnet**,
daß
a) zunächst flüssiger Lack durch mindestens eine Lack-Einspritzvorrichtung (1) über mindestens eine Lack-Einspritzdüse (2) in die Kavität (3) eines Spritzgießwerkzeugs (4) eingebracht wird, bis diese volumetrisch gefüllt ist,
und daß
b) anschließend das Volumen der Kavität (3), vorzugsweise durch verschiebbare Elemente, vergrößert wird, während gleichzeitig geschmolzenes Kunststoffmaterial durch eine Spritzeinheit (5) über eine Kunststoff-Einspritzdüse (6) in die Kavität (3) des Spritzgießwerkzeugs (4) eingebracht wird, so daß der durch die Volumenvergrößerung der Kavität (3) im Inneren entstehende, vom flüssigen Lack ummantelte Hohlraum mit Kunststoffmaterial weitgehend ausgefüllt wird.

5. Verfahren nach mindestens einem der Ansprüche 1 bis 4, dadurch gekennzeichnet, daß als Lack-Einspritzvorrichtung (1) eine Kolbenspritzeinheit zum Einsatz kommt.

6. Verfahren nach mindestens einem der Ansprüche 1 bis 4, dadurch gekennzeichnet, daß als Lack-Einspritzvorrichtung eine Pumpe, insbesondere eine Zahnradpumpe, zum Einsatz kommt.

7. Verfahren nach mindestens einem der Ansprüche 1 bis 6, dadurch gekennzeichnet, daß der Lack vor dem Einspritzen auf eine definierte Temperatur erhitzt wird.

8. Verfahren nach Anspruch 7, dadurch gekennzeichnet, daß die Lack-Einspritzvorrichtung (1) den einzuspritzenden Lack auf eine definierte Temperatur erhitzt.

9. Verfahren nach mindestens einem der Ansprüche 1 bis 8, dadurch gekennzeichnet, daß der einzuspritzende Lack und das einzuspritzende Kunststoffmaterial eine ähnlich große Viskosität haben.

10. Verfahren nach mindestens einem der Ansprüche 1 bis 9, dadurch gekennzeichnet, daß der eingespritzte Lack ein Zwei- oder Mehrkomponentenlack ist, wobei die Komponenten aus zwei oder mehreren verschiedenen Lack-Einspritzvorrichtungen (1, 8) über zwei oder mehrere verschiedene Lack-Einspritzdüsen (2, 9) eingespritzt werden und wobei sich die Komponenten erst hinter den Lack-Einspritzdüsen (2, 9) vermischen.

11. Verfahren nach mindestens einem der Ansprüche 1 bis 10, dadurch gekennzeichnet, daß zwecks Aushärtung des Lacks die Temperatur des Spritzgießwerkzeugs (4), vorzugsweise kurzzeitig, durch geeignete Temperierelemente (10) erhöht wird.

12. Verfahren nach mindestens einem der Ansprüche 1 bis 11, dadurch gekennzeichnet, daß zwecks Aushärtung des Lacks die Temperatur der formgebenden Flächen des Spritzgießwerkzeugs (4) unmittelbar vor dem Schließen des Werkzeugs durch Strahlung, durch Induktion oder in ähnlicher Weise erhöht wird.

13. Verfahren nach Anspruch 1 oder einem der Ansprüche 5 bis 12, dadurch gekennzeichnet, daß nach dem Einbringen des mit Lack ummantelten geschmolzenen Kunststoffmaterials in die Kavität (3) ein Fluid, vorzugsweise Gas, in den noch flüssigen Teil des Kunststoffs eingebracht wird.

14. Verfahren nach mindestens einem der Ansprüche 1 bis 13, dadurch gekennzeichnet, daß dem einzuspritzenden Lack unmittelbar vor seiner Einspritzung ein Reaktionsbeschleuniger (11) zugegeben wird, der die Aushärtung des Lacks beschleunigt.

15. Verfahren nach mindestens einem der Ansprüche 1 bis 14, dadurch gekennzeichnet, daß das in die Kavität (3) eingebrachte Kunststoffmaterial schäumbarer Kunststoff ist.

16. Verfahren nach mindestens einem der Ansprüche 1 bis 15, dadurch gekennzeichnet, daß vor dem Einbringen des mit Lack ummantelten Kunststoffmaterials bzw. vor dem Einbringen des Lacks in die Kavität (3) des Spritzgießwerkzeugs (4) die formenden Innenflächen der Kavität (3) mit einem Mittel versehen werden, das das spätere Entformen des Gegenstands aus dem Spritzgießwerkzeug (4) erleichtert.

17. Verfahren nach mindestens einem der Ansprüche 2 bis 4, dadurch gekennzeichnet, daß nach Durchführung des Verfahrensschritts a) und vor Durchführung des Verfahrensschritts b) der in die Kavität (3) des Spritzgießwerkzeugs (4) eingebrachte Lack gemäß einem vorgegebenen Profil für eine definierte Zeit unter Druck gehalten wird.

18. Verfahren nach mindestens einem der Ansprüche 2 bis 4, dadurch gekennzeichnet, daß die Einbringung des Lacks in die Kavität (3) entgegen der Richtung der Schwerkraft erfolgt.
